# EUROPÄISCHE PATENTSCHRIFT

(11) **EP 0 533 990 B1**
(45) Veröffentlichungstag und Bekanntmachung des Hinweises auf die Patenterteilung: **23.07.1997**
(21) Anmeldenummer: 91116585.0
(22) Anmeldetag: 27.09.1991
(51) Int. Cl.: G05B 19/408

(54) **Numerische Steuerung für Werkzeugmaschinen oder Roboter**
Numerical control for machine-tools or robots
Commande numérique pour machine-outils ou robots

(43) Veröffentlichungstag der Anmeldung: 31.03.1993
(73) Patentinhaber: SIEMENS AKTIENGESELLSCHAFT, 80333 München (DE)
(72) Erfinder: Bärnklau, Armin, Dipl.-Ing., W-8522 Herzogenaurach (DE); Wetzel, Friedrich, Dipl.-Ing., W-8522 Heroldsbach (DE); Schmitz, Norbert, Dipl.-Ing., W-8522 Herzogenaurach (DE)

(56) Entgegenhaltungen:
- EP-A- 0 184 736
- PATENT ABSTRACTS OF JAPAN vol. 11, no. 12 (P-535)(2459) 13. Januar 1987 & JP-A-61 187 009

## Beschreibung

Die Erfindung bezieht sich auf eine numerische Steuerung für Werkzeugmaschinen oder Roboter, wobei entsprechend in einem Teileprogrammspeicher gespeicherten Angaben über die Bewegungsbahn eines Werkzeugs gegenüber einem Werkstück zunächst in einer Satzaufbereitungsstufe die signifikanten Satzdaten erzeugt werden, wobei daraufhin aus diesen ein Interpolator die Soll-Werte für jede Lagereglerstufe von den die Bewegung veranlassenden Antrieben der Werkzeugmaschine oder des Roboters bestimmt und wobei die Umsetzvorgänge in der Satzaufbereitungsstufe und im Interpolator von einem Rechenwerk zeitscheibengesteuert vorgenommen werden. Eine solche Steuerung ist aus der EP-A-0 184 736 bekannt.

Um auf einer Werkzeugmaschine mit einer numerischen Steuerung eine Kontur für ein Werkstück zu erzeugen, werden pro NC-Satz möglichst kleine lineare Wegabschnitte programmiet, um diese Kontur möglichst genau zu fertigen. Zusätzlich besteht im Regelfall die Anforderung, diese Bahn mit möglichst hoher Geschwindigkeit zu erstellen. Der Quotient aus Bahnweg je Satz und Bahngeschwindigkeit ergibt die sogenannte "Satzwechselzeit", die auch als "Satzzykluszeit" bezeichnet wird. Die "Satzwechselzeit"ist ein Parameter für die Leistungsfähigkeit der jeweiligen numerischen Steuerung. Sie wird maßgeblich durch die Prozessorleistung des Systems bestimmt.

Bei gattungsgemäßen Steuerungen wird nach einem Zeitscheibenverfahren, auf das im folgenden noch eingegangen wird, die Satzaufbereitung und Interpolation von einem gemeinsamen Rechenwerk vorgenommen. Dabei muß jedoch stets sichergestellt sein, daß dem Interpolator von der Satzaufbereitung auch ständig aufbereitete Sätze zur Verfügung gestellt werden, weil ansonsten ein Einbruch des Bahnvorschubs erfolgen würde.

Aufgabe der Erfindung ist es, auch bei hoher Bearbeitungsgeschwindigkeit Einbrüche des Bahnvorschubs aufgrund kurzfristiger Überlastung des Rechenwerks zu vermeiden.

Gemäß der Erfindung wird diese Aufgabe dadurch gelöst, daß zwischen der Satzaufbereitungsstufe und dem Interpolator ein FIFO-Speicher als Pufferspeicher für die entsprechend dem Betrieb des Interpolators belastbare Vorhaltung der signifikanten Satzdaten von maximal n Sätzen vorgesehen ist.

Die Erfinder haben dabei erkannt, daß kurzfristige hohe Beanspruchungen der numerischen Steuerungen durchaus tolerierbar sind, wenn sichergestellt ist, daß diese Spitzen abgefangen werden. Dies ist aber bei einer numerischen Steuerung für Werkzeugmaschinen oder Roboter durchaus möglich, weil während des Betriebs immer wieder mit regulären Unterbrechungen, beispielsweise bei einem Einspannen eines neuen Werkzeugs oder Werkstücks, gerechnet werden kann.

Eine vorteilhafte Ausbildung der Erfindung ist dadurch gekennzeichnet, daß durch einen speziellen Steuerbefehl ein Füllen des Pufferspeichers veranlaßbar ist. Damit kann gezielt ein Auffüllung des FIFO-Speichers vorgenommen werden, wobei dies entweder so geschehen kann, daß der Steuerbefehl manuell ausgelöst wird, was jedoch die Aufmerksamkeit eines Bedieners der Maschine bedingt, oder aber, daß der Steuerbefehl abhängig von Zustandsmeldungen der Werkzeugmaschine oder des Roboters bzw. vom Programm zur Steuerung der Werkzeugmaschine oder des Roboters auslösbar ist. In diesen Fällen wird die Steuerbefehlsauslösung abhängig vom Ist- bzw. Sollzustand des Prozesses automatisch bewirkt. In allen Fällen sollte der FIFO-Speicher jedoch so weit wie möglich genutzt werden. Das erfolgt am besten dadurch, daß der Steuerbefehl erst dann aufgehoben wird, wenn detektiert wird, daß der Pufferspeicher vollständig gefüllt ist.

Ein Ausführungsbeispiel der Erfindung ist in der Zeichnung dargestellt und wird im folgenden näher erläutert. Dabei zeigt:
- FIG 1: ein Blockschaltbild zum Stand der Technik,
- FIG 2: ein Blockschaltbild gemäß der Erfindung,
- FIG 3: ein Diagramm zur Funktionsweise handelsüblicher Steuerungen und
- FIG 4: ein Diagramm zur Funktionsweise der erfindungsgemäßen Steuerung.

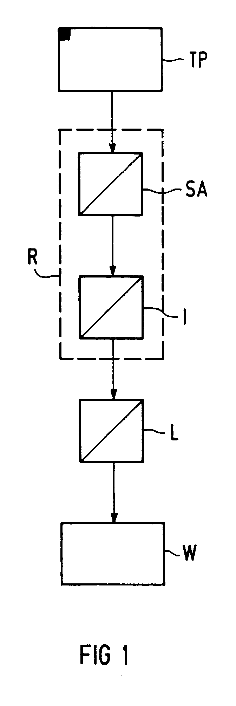

In der Darstellung gemäß FIG 1 ist die Struktur einer handelsüblichen numerischen Steuerung hinsichtlich ihrer Bedeutung für die im folgenden noch zu erläuternde Erfindung in Form eines Blockschaltbildes gezeigt. Eine solche Struktur wird im übrigen auch beschrieben im Aufsatz "SIßnJMERIK 850 und 880, flexibel für technische und funktionale Anpassungen" von M. Grobleben und D. Kremper in "Energie und Automation 9 (1987) Spezial >>EMO<< 1987", Seiten 4 bis 7.

In einem Teileprogrammspeicher TP sind dabei die für die Bearbeitung eines Werkstückes relevanten Daten abgelegt. Diese gelangen zunächst an eine Satzaufbereitungsstufe SA, die signifikante Satzdaten erzeugt, die dann in einem Interpolator I interpoliert werden. Am Ausgang des Interpolators I liegen dann Sollwerte zum Steuern einer Werkzeugmaschine W vor, wobei die Sollwerte dazu zunächst einer Lagereglerstufe L zugeleitet werden, die dann die Einflußnahme auf die Antriebe der Werkzeugmaschine W vornimmt. Die Umsetzvorgänge der Satzaufbereitungsstufe SA und des Interpolators I erfordern Prozessorleistung, die von einem gemeinsamen Rechenwerk R zu leisten ist. Dieses ist in der Darstellung gemäß FIG 1 durch gestrichelte Linien angedeutet.

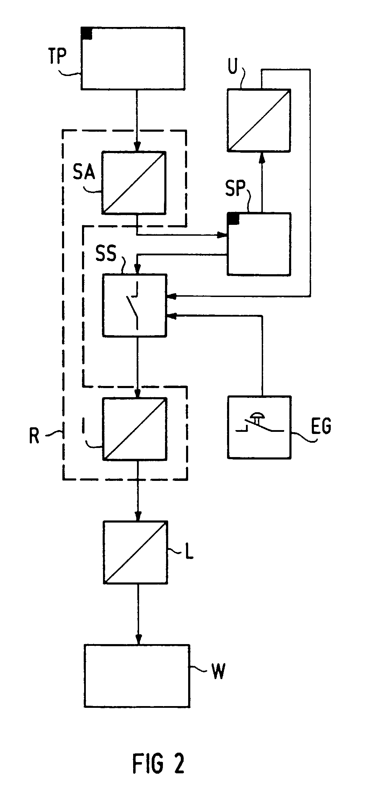

In der Darstellung gemäß FIG 2 ist ein Strukurbild einer erfindungsgemäß ausgebildeten Steuerung für Werkzeugmaschinen W gezeigt, wobei gleiche Elemente wie bei der Darstellung gemäß FIG 1 auch mit gleichen Bezugszeichen angegeben sind. Die Erfindung ist dabei dadurch charakterisiert, daß zwischen die Satzaufbereitungsstufe SA und den Interpolator I ein FIFO-Speicher SP geschaltet ist, der signifigante Satzdaten der Satzaufbereitungsstufe SA zwischenspeichert und erst nach Schließen einer Schaltstufe SS an den Interpolator I weiterleitet. Ein Freischalten des Datenflusses zwischen der Satzaufbereitungsstufe SA und den Interpolator I kann mit Hilfe eines Eingabegeräts EG erfolgen, das in der Darstellung durch eine manuell betätigbare Taste angedeutet ist. Selbstverständlich kann auch durch die Programmsteuerung oder Prozeßsignale sichergestellt werden, daß die Schaltstufe SS geöffnet ist, solange ein gezieltes Auffüllen des FIFO-Speichers SP, auf das im folgenden noch eingegangen wird, erfolgt. Der Füllzustand des FIFO-Speichers SP kann mit Hilfe eines Umsetzers U detektiert werden, der stets dann, wenn der FIFO-Speicher SP gezielt gefüllt worden ist, die Schaltstufe SS durchschaltet, so daß der Interpolator I in Betrieb gehen kann.

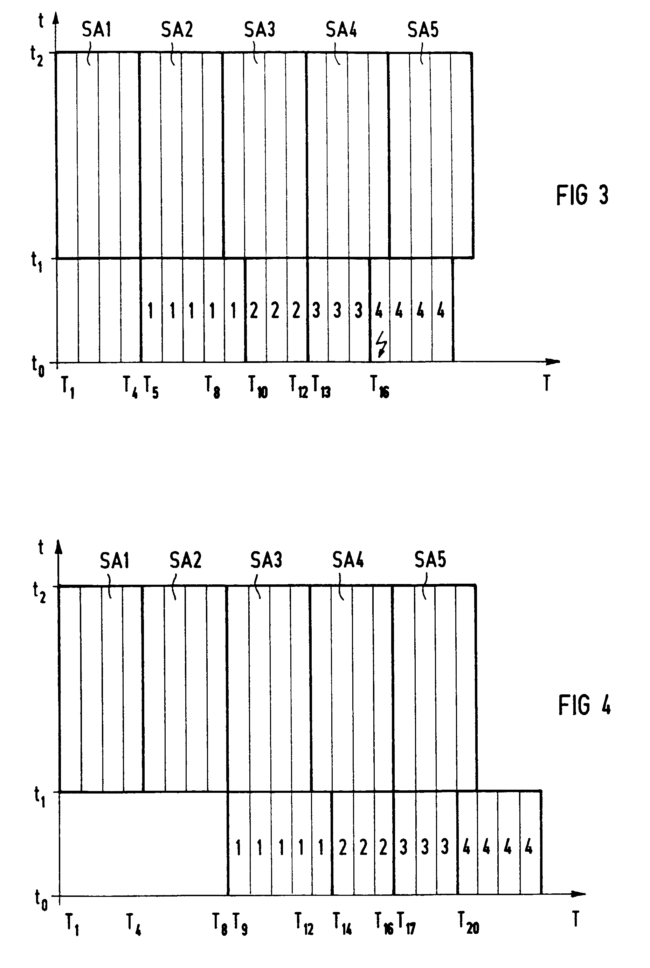

Um die Funktion der Einrichtung zu verdeutlichen, ist in der Darstellung gemäß FIG 3 ein Diagramm gezeigt, das die zeitliche Abfolge des Verarbeitungsprozesses bei handelsüblichen numerischen Steuerungen angibt. In Abszissenrichtung sind dabei Zeitscheiben T dargestellt, wobei die im weiteren relevanten Zeitscheiben T₁, T₄, T₅, T₆, T₁₀, T₁₂, T₁₃ und T₁₆ ausdrücklich bezeichnet sind. In Ordinatenrichtung ist die Bearbeitungszeit für die jeweiligen Zeitscheiben als Zeit t dargestellt. Eine Zeitscheibe möge dabei jeweils zur Zeit t₀ beginnen, zu einem Zeitpunkt t₁ erfolge ein Umschaltvorgang und das Ende einer jeweiligen Zeitscheibe sei als t2 angenommen. Innerhalb jeder Zeitscheibe T ist dabei die Zeitspanne zwischen t₀ bis t₁ diejenige Zeitspanne, in der die Rechnerleistung des Prozessors bzw. des zugeordneten Rechners R für die Interpolation im Interpolator I verwendet wird. Die Zeitspanne zwischen t₁ und t₂ ist jeweils diejenige Zeitspanne jeder Zeitscheibe T, die für die Rechnerleistung des Rechners R für die Satzaufbereitungsstufe SA zur Verfügung steht. Die Abfolge der Zeitscheiben T ist jeweils so gewählt, daß während jeder Zeitscheibe T ein Interpolationsvorgang erledigt werden kann.

In der Darstellung ist nur der Einfachheit angenommen, daß jeweils eine Satzaufbereitung innerhalb von genau vier Interpolationsvorgängen abgeschloßen wird. Die jeweiligen Sätze sind in der Darstellung durch starke Felder hervorgehoben, die mit SA1, SA2, SA3, SA4 und SA5 für fünf aufeinanderfolgende Sätze bezeichnet sind.

Damit der Interpolator I arbeiten kann, ist es erforderlich, diesem die von der Satzaufbereitungsstufe SA vorbereiteten zugehörigen Satzdaten zur Verfügung zu stellen, die dann im Interpolator I im Interpolationstakt abgearbeitet werden. Die Anzahl der jeweiligen Interpolationsschritte pro Satz hängt im wesentlichen von der zugehörigen Bahngeschwindigkeit ab. Bei langsamen Geschwindigkeiten sind jeweils viele Interpolationsschritte während eines zugehörigen Satzes erforderlich, bei schnellen Bahnbewegungen sinkt diese Anzahl von Interpolationsschritten. Im Ausführungsbeispiel sei angenommen, daß in den Zeitscheiben T₁ - T₄ bis zum Zeitpunkt t₂ der Zeitscheibe T₄ der Satz SA1 abgearbeitet worden ist. Damit liegt zum korrespondierenden Zeitpunkt t₀ der Zeitscheibe T₅ ein Zustand vor, der dem Interpolator I eine Interpolation ermöglicht. Im Ausführungsbeispiel sei angenommen, daß dieser Interpolationsvorgang für den Satz SA1 in fünf Interpolationsschritten erledigt ist. Dies ist in der Darstellung durch die Zahlenfolge 11111 in einem den jeweiligen Interpolationsvorgang begrenzenden, stark umrandeten Feld angedeutet.

Bereits in der Zeitscheibe T₈ ist zum Zeitpunkt t₂ jedoch der Satz SA2 abgearbeitet worden, so daß zur Zeit t₀ zu Beginn der Zeitscheibe T₁₀ die relevanten Angaben für das Interpolieren des zweiten Satzes SA2 vorliegen. Dieser Interpolationsvorgang möge beim Auführungsbeispiel wegen einer gesteigerten Bahngeschwindigkeit sich nur über drei Interpolationstakte 222 erstrecken. Die Satzbearbeitung des Satzes SA3 ist zum Zeitpunkt t₂ der Zeitscheibe T₁₂ erledigt, so daß zur Zeit t₀ der Zeitscheibe T₁₃ eine Interpolation für den dritten Satz SA3 in drei Interpolationsschritten 333 geschehen kann. Der Interpolator I würde damit zur Zeit t₀ der Zeitscheibe T₁₆ die Daten von der Satzaufbereitungsstufe SA für den Satz SA4 benötigen. Wie dem Diagrammen entnehmbar ist, liegen diese Daten jedoch noch nicht vor, da hierzu der Zeitpunkt t₂ der Zeitscheibe T₁₆ erreicht sein müßte. Dies führt zu einem Bahngeschwindigkeiteinbruch, der durch einem Pfeil in der Zeitscheibe T₁₆ angedeutet ist.

In der Darstellung gemäß FIG 4 ist die Wirksamkeit des Speichers SP gemäß FIG 2 an Hand eines einfachen Beispiels gezeigt, bei dem der FIFO-Speicher eine definierte Vorhaltung nur eines Satzes bewerkstelligen möge. Im Übrigen wird von einem gleichen Bewegungsablauf, wie dem gemäß der Darstellung gemäß FIG 3 ausgegangen.

Zunächst wird der FIFO-Speicher SP mit den Daten eines zusätzlichen Satzes gefüllt, so daß der Interpolator I erst zur Zeit t₀ der Zeitscheibe T₉ startet.

Während der erste Interpolationsvorgang 11111 für den Satz SA1 in seiner Dauer über die Satzbearbeitungsdauer für einen Satz hinausgeht und somit auf jeden Fall auch ohne FIFO-Speicher SP unkritisch wäre, sind die relativ hohen Bahngeschwindigkeiten beim Interpolationsvorgang des zweiten Satzes SA2 und des dritten Satzes SA2, die beim Stand der Technik die geschilderten Probleme bereiten, nunmehr unkritisch, da jeweils dann, wenn der Interpolator I Satzdaten benötigt, diese von der Satzaufbereitungsstufe SA aufgrund der Pufferung vorgehalten sind. Bei der zuvor geschilderten kritischen Situation der Interpolation des vierten Satzes SA4 ist hier zu Beginn die Zeitscheibe T₂₀ ersichtlich, daß zur Zeit t₀ die zur Interpolation erforderlichen Daten der Satzaufbereitungsstufe SA bereits vorliegen, denn die Bearbeitung des Satzes SA ist bereits zur Zeit t₂ der Zeitscheibe T₁₆ erfolgt.

Im geschilderten Fall bestünde also noch eine Reserve von drei Interpolationstakten, bevor der im Zusammenhang mit FIG 3 geschilderte kritische Betriebszustand sich überhaupt einstellen könnte.

Selbstverständlich läßt sich durch die Anzahl der vorzuhaltenen Sätze eine Anpassung an den jeweiligen Prozeß erreichen, so daß die kritischen Bahngeschwindigkeitseinbrüche im laufenden Betrieb vermieden werden. Die Tatsache, daß die eigentliche Bahnbewegung erst mit einer durch die Pufferung bedingten Zeitverzögerung erfolgt, ist im technischen Alltag unkritisch. Ein Wartezustand vor einem Prozeß bedingt zwar gewisse zeitliche Einschränkungen, jedoch wird mit Sicherheit vermieden, daß während des laufenden Bewegungsvorgangs Einbrüche erfolgen. Gerade diese würden unter Umständen Bearbeitungsprozesse ganz empfindlich stören (Einbrüche der Bearbeitungsgüte, Gefährdung der Werkzeuge und Werkstücke).

## Patentansprüche

1. Numerische Steuerung für Werkzeugmaschinen (W) oder Roboter, wobei entsprechend in einem Teileprogrammspeicher (TP) gespeicherten Angaben über die Bewegungsbahn des Werkzeugs gegenüber einem Werkstück zunächst in einer Satzaufbereitungsstufe (SA) die signifikanten Satzdaten erzeugt werden, wobei daraufhin aus diesen ein Interpolator (I) die Soll-Werte für jede Lagereglerstufe (L) von den die Bewegung veranlassenden Antrieben der Werkzeugmaschine (W) oder des Roboters bestimmt und wobei die Umsetzvorgänge in der Satzaufbereitungsstufe (SA) und im Interpolator (I) von einem Rechenwerk (R) zeitscheibengesteuert vorgenommen werden, **dadurch gekennzeichnet**, daß zwischen der Satzaufbereitungsstufe (SA) und dem Interpolator (I) ein FIFO-Speicher (SP) als Pufferspeicher für die entsprechend dem Betrieb des Interpolators (I) belastbare Vorhaltung der signifikanten Satzdatei von maximal n Sätzen vorgesehen ist.

2. Numerische Steuerung nach Anspruch 1, **dadurch gekennzeichnet**, daß durch einen speziellen Steuerbefehl ein Füllen des Pufferspeichers (SP) veranlaßbar ist.

3. Numerische Steuerung nach Anspruch 2, **dadurch gekennzeichnet**, daß der Steuerbefehl manuell auslösbar ist.

4. Numerische Steuerung nach Anspruch 2, **dadurch gekennzeichnet**, daß der Steuerbefehl abhängig von Zustandsmeldungen der Werkzeugmaschine (W) oder des Roboters auslösbar ist.

5. Numerische Steuerung nach Anspruch 2, **dadurch gekennzeichnet**, daß der Steuerbefehl abhängig vom Programm zum Steuern der Werkzeugmaschine (W) oder des Roboters auslösbar ist.

6. Numerische Steuerung nach einem der vorstehenden Ansprüche, **dadurch gekennzeichnet**, daß der Steuerbefehl erst dann aufgehoben wird, wenn detektiert wird, daß der Pufferspeicher (SP) vollständig gefüllt ist.

## Claims

1. Numerical control for machine tools (W) or robots, whereby corresponding to information stored in a partial program memory (TP) the significant set data are generated by way of the movement path of the tool relative to a workpiece initially in a set preparation stage (SA), whereby thereupon from this set data an interpolator (I) determines the desired values for each position controller stage (L) of the drives of the machine tool (W) or the robot causing the movement, and whereby the conversion procedures are undertaken in the set preparation stage (SA) and in the interpolator (I) by a counter (R) in a time-slice-controlled manner, characterized in that between the set preparation stage (SA) and the interpolator (I) a FIFO memory (SP) is provided as buffer memory for the provision of the significant set data file of a maximum of n sets, which can be loaded corresponding to the operation of the interpolator (I).

2. Numerical control according to claim 1,
characterized in that a filling of the buffer memory (SP) can be caused by a specific control command.

3. Numerical control according to claim 2,
characterized in that the control command can be initiated manually.

4. Numerical control according to claim 2,
characterized in that the control command can be initiated as a function of status signals of the machine tool (W) or the robot.

5. Numerical control according to claim 2,
characterized in that the control command can be initiated as a function of the program to control the machine tool (W) or the robot.

6. Numerical control according to one of the preceding claims, characterized in that the control command is only cancelled when it is detected that the buffer memory (SP) is completely filled.

## Revendications

1. Commande numérique pour machines-outils (W) ou robots, les données en bloc significatives étant d'abord produites dans un étage (SA) de préparation de bloc, suivant des indications sur la trajectoire de déplacement d'un outil par rapport à une pièce à usiner, mémorisées dans une mémoire (TP) de programmes de pièces, un interpolateur (I) déterminant ensuite à partir de ces données en bloc les valeurs de consigne pour chaque étage (L) d'asservissement de position des dispositifs d'entraînement, provoquant le mouvement, de la machine-outil (W) ou du robot, et les opérations de conversion dans l'étage (SA) de préparation des blocs et dans l'interpolateur (I) étant effectuées de manière commandée par tranches de temps par une unité (R) de calcul, caractérisée en ce qu'il est prévu entre l'étage (SA) de préparation des blocs et l'interpolateur (I) une mémoire (SP) FIFO servant de mémoire tampon pour la mise en réserve des données en bloc significatives d'au maximum n blocs, qui peut être changée en fonction du fonctionnement de l'interpolateur (I).

2. Commande numérique suivant la revendication 1, caractérisée en ce qu'un remplissage de la mémoire (SP) tampon peut être provoqué par une instruction de commande spéciale.

3. Commande numérique suivant la revendication 2, caractérisée en ce que l'instruction de commande peut être déclenchée manuellement.

4. Commande numérique suivant la revendication 2, caractérisée en ce que l'instruction de commande peut être déclenchée en fonction de messages d'état de la machine-outil (W) ou du robot.

5. Commande numérique suivant la revendication 2, caractérisée en ce que l'instruction de commande peut être déclenchée en fonction du programme servant à commander la machine-outil (W) ou le robot.

6. Commande numérique suivant l'une des revendications précédentes, caractérisée en ce que l'instruction de commande n'est supprimée que s'il est détecté que la mémoire (SP) tampon est totalement remplie.
